# EUROPEAN PATENT SPECIFICATION

(11) **EP 4 612 645 B1**
(45) Date of publication and mention of the grant of the patent: **30.09.2026**
(21) Application number: 24798632.6
(22) Date of filing: 07.10.2024
(51) Int. Cl.: G06T 5/77, G06T 11/00

(54) **ARTIFICIAL INTELLIGENCE FOR EFFICIENT IMAGE EDITING**
KÜNSTLICHE INTELLIGENZ ZUR EFFIZIENTEN BILDBEARBEITUNG
INTELLIGENCE ARTIFICIELLE POUR ÉDITION EFFICACE D'IMAGE

(30) Priority: 09.11.2023 US 202363597655 P
(43) Date of publication of application: 10.09.2025
(73) Proprietor: Google LLC, Mountain View, CA 94043 (US)
(72) Inventor: NARAYANA, Pradyumna, Mountain View, California 94043 (US); PRUTHI, Garima, Mountain View, California 94043 (US)
(74) Representative: Marks & Clerk GST
(86) International application number: PCT/US2024/050205
(87) International publication number: WO 2025/101294

(56) References cited:
- JASKIRAT SINGH ET AL: "Divide, Evaluate, and Refine: Evaluating and Improving Text-to-Image Alignment with Iterative VQA Feedback", ARXIV.ORG, CORNELL UNIVERSITY LIBRARY, 201 OLIN LIBRARY CORNELL UNIVERSITY ITHACA, NY 14853, 10 July 2023 (2023-07-10), XP091559709
- YUJIE LU ET AL: "LLMScore: Unveiling the Power of Large Language Models in Text-to-Image Synthesis Evaluation", ARXIV.ORG, CORNELL UNIVERSITY LIBRARY, 201 OLIN LIBRARY CORNELL UNIVERSITY ITHACA, NY 14853, 18 May 2023 (2023-05-18), XP091512068

## Description

### BACKGROUND

This specification relates to data processing, artificial intelligence, and generating images using artificial intelligence.

Advances in machine learning are enabling artificial intelligence to be implemented in more applications. For example, large language models have been implemented to allow for editing images. This allows for more efficient image editing using provided information associated with the images.

Document: "Divide, Evaluate, and Refine: Evaluating and Improving Text-to-Image Alignment with Iterative VQA Feedback", JASKIRAT SINGH ET AL, ARXIV.ORG, CORNELL UNIVERSITY LIBRARY, 201 OLIN LIBRARY CORNELL UNIVERSITY ITHACA, NY 14853, 10 July 2023 (2023-07-10), XP091559709 discloses a solution to evaluate a source text to image synthesis through a score. A generated image is transformed into an image-level and an object level visual descriptions. The description is subsequently fed into a trained LLM that measures the alignment between the generated image and the source text.

Document "LLMScore: Unveiling the Power of Large Language Models in Text-to-Image Synthesis Evaluation", YUJIE LU ET AL , ARXIV.ORG, CORNELL UNIVERSITY LIBRARY, 201 OLIN LIBRARY CORNELL UNIVERSITY ITHACA, NY 14853, 18 May 2023 (2023-05-18), XP091512068 discloses using a language model to derive explanation data for an image, to be used by the language model to provide a interpretable, reasoned text-to-image alignment metric.

### SUMMARY

In general, one innovative aspect of the subject matter described in this specification can be embodied in methods that include the actions of receiving data indicating that a first image violates one or more conditions; in response to receiving the data indicating that the first image violates the one or more conditions, generating an image editing prompt that instructs an image editing model to edit the first image to satisfy the one or more conditions, the generating including: generating explanation data that indicates a location of content within the image that violates the one or more conditions; and generating, using a language model, the image editing prompt based on the explanation data and the one or more conditions; providing, as input to an image editing model, the image editing prompt and the first image; receiving, as an output of the image editing model, a second image; and providing the second image to one or more devices. Other implementations of this aspect include corresponding apparatus, systems, and computer programs, configured to perform the aspects of the methods, encoded on computer storage devices.

These and other embodiments can each optionally include one or more of the following features. In some aspects, generating the explanation data includes providing the image and the one or more conditions to a multimodal model trained to identify locations within images that violate input conditions.

In some aspects, generating the explanation data includes providing the image and the one or more conditions to a multimodal model trained to predict whether an image violates input conditions and to output data indicating a location of content in the image that is likely to violate at least one of the input conditions.

In some aspects, generating the explanation data includes providing the first image to a first machine learning model trained to generate image captions for images, receiving, from the first machine learning model, an image caption for the image, providing the image caption and the one or more conditions to a second machine learning model trained to output explanation data for images based on input image captions and input conditions, and receiving the explanation data for the first image from the second machine learning model.

In some aspects, the explanation data includes a location indicator. The location indicator indicates a location of content in the first image that is determined to violate at least one of the one or more conditions. The location indicator can include a bounding box that is depicted in the first image around the content in the first image that is determined to violate at least one of the one or more conditions. The location indicator can include coordinates that define a bounding box around the content in the first image that is determined to violate at least one of the one or more conditions. Providing, as input to an image editing model, the image editing prompt and the first image can include providing the location indicator to the image editing model.

In some aspects, the explanation data includes an explanation that indicates why the first image violates the one or more conditions. In some aspects, the image editing prompt includes at least a portion of the explanation data.

In some aspects, generating, using the language model, the image editing prompt based on the explanation data and the one or more conditions includes generating a prompt for the language model using the explanation data and providing the prompt to the language model. The prompt can include instructions that instruct the language model to generate the image editing prompt based on the explanation data and data defining each condition violated by the first image. The explanation data can include a name of each condition violated by the first image.

In some aspects, generating the image editing prompt includes obtaining a prompt template that is adapted to the image editing model and populating the prompt with at least a portion of the explanation data, including a name of a condition that the first image is determined to violate. The image editing prompt output by the language model is adapted to the image editing model.

Particular embodiments of the subject matter described in this specification can be implemented so as to realize one or more of the following advantages. The techniques described in this document enable artificial intelligence (AI) to be used to generate updated images based on data related to one or more conditions. The AI system can use one or more machine learning models to evaluate images that fail to satisfy the condition(s) and determine why the image fails to satisfy the condition(s) and/or which portion of the image causes the image to not satisfy the condition(s). Absent the described techniques, a user may have a difficult time determining why an image is rejected by a system that evaluates image based on conditions and attempting to modify the image in various ways in an attempt to satisfy the condition(s). This can result in the user making unnecessary modifications that result in lower quality images. This can also result in the user uploading multiple versions of the image to the system in an attempt to find a version that satisfies the condition(s), placing an unnecessary burden on the system and the network that connects the system to the user's device and thereby wasting computing resources and network bandwidth. Additionally, uploading multiple versions of the image can cause data privacy/confidentiality issues, as the consistent uploading allows for adversarial attacks on the machine learning model to learn how the model works. To make matters worse, some systems employ many different conditions for different types of images or for images of different types of items. Therefore, an image may satisfy the conditions(s) for one type of item (e.g., one type of product), but may not satisfy the condition(s) for another type of item.

The techniques described herein can solve these problems by using AI to determine why an image fails to satisfy a set of conditions and edit the image such that the image satisfies the conditions. In this way, a user may only have to upload an image once to obtain a compliant image, thereby conserving resources that would otherwise be wasted uploading and evaluating multiple images. For example, a user can send the first image to the system, and the system can determine whether the first image violates the conditions. If so, the system can use a machine learning model (e.g., an image editing model) to update the image such that the updated image does not violate the conditions, thus allowing the user to efficiently submit an image to the system without having to upload additional images that the user hopes will conform to the conditions. In this way, compliant images are generated without having to upload multiple images, which reduces the computational burden (e.g., processing cycles for evaluating images, data storage for storing images, etc.) placed on the system that evaluates the images, reduces the amount of network bandwidth consumed and the associated burden placed on network resources to send multiple images, and reduces the computational burden placed on the user's device in modifying images and sending the images to the system that evaluates the images.

A chain of prompts to one or more machine learning models can be used to evaluate an image to determine why the image fails to satisfy a set of conditions and to generate an updated image based on the evaluation. In this way, the tasks are separated and models that are trained for specific tasks can be used to generate higher quality outputs that take into account the outputs of previous models. This enables the system to generate higher quality explanations of why an image fails to satisfy the conditions and to generate a high quality specialized image editing prompt that accurately instructs an image editing model to correct the image. Separating the process into multiple discrete AI tasks can reduce the amount of information provided to AI models for each task, which prevents hallucinations and other AI model errors that commonly occur when a substantial amount of information is provided as input to an AI model.

Multiple machine learning models can be used to evaluate and edit images based on conditions. For example, a multimodal model with question and answering and image generation capabilities can evaluate an image and a set of conditions and output explanation data indicating why and/or what portions of the image cause the image to not satisfy the conditions. A language model can then generate an image editing prompt based on the explanation data and an image editing model, e.g., a text to image model, can generate an updated version of the image based on the prompt and the image. Using multiple models in this way enables more accurate outputs and therefore higher quality images than using a single model to perform all of these different tasks. Additionally, due to using multiple models rather than a single model to handle all tasks in the process, the system can scale each respective model for deployment to generate higher quality images while efficiently managing resources. In particular, the image editing model can be relatively larger and more complex in comparison to the other models (e.g., the models for generating image editing prompts for the image editing model, which can result in higher quality images, higher throughput, reduced memory use, and reduced latency.

Using a multimodal model to generate the explanation data and a language model to generate a prompt for the image editing model enables the use of an off the shelf, general purpose, or other pre-trained image editing model without customizing or retraining the image editing model. Instead, the techniques described herein can include the use of specialized prompts that instruct the language model to generate an image editing prompt that is specifically adapted to the image editing model. Thus, this precludes the need for adapting or retraining the image editing model to accept inputs generated by another model while ensuring that the image editing model generates high quality edited images. Using the combination of models in this way enables the overall AI system to generate edited images that comply with large sets of conditions the first time, thereby reducing the number of images uploaded for evaluation and the number of evaluations performed on the images and providing the various computational savings described above and elsewhere herein. Thus, the techniques described in this provide a specific application of AI models and prompts to the AI models to solve problems that occur when applying conditions to images and generating images that satisfy the conditions and more generally in the automated image generation field.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which images are evaluated based on conditions and edited using artificial intelligence.
FIG. 2 is a block diagram illustrating interactions between an artificial intelligence system, a multimodal model, a language model, and an image editing model.
FIG. 3 is a flow chart of an example process of generating an image based on one or more conditions.
FIG. 4 a block diagram of an example computer.

Like reference numbers and designations in the various drawings indicate like elements.

### DETAILED DESCRIPTION

This specification describes techniques for enabling artificial intelligence to generate an updated image based on one or more conditions. For example, the techniques can be used to evaluate images that do not satisfy one or more conditions and to edit the images such that the edited image satisfies the condition(s). Artificial intelligence (AI) is a segment of computer science that focuses on the creation of intelligent agents that can learn and act autonomously (e.g., without human intervention). Artificial intelligence can utilize machine learning, which focuses on developing algorithms that can learn from data, natural language processing, which focuses on understanding and generating human language, and/or computer vision, which is a field that focuses on understanding and interpreting images and videos.

The techniques described throughout this specification enable AI models to edit images that fail to satisfy one or more conditions such that the edited image satisfies the condition(s). The conditions can be policy conditions of an entity that makes the images available for others to view, e.g., an entity that distributes image digital components to users. Generally speaking, the AI system can receive data indicating that an image violates the conditions, and the AI system can use an image editing model to generate an updated version of the image, e.g., by editing the image, that does not violate the conditions. The AI system can use one or more machine learning models, e.g., a language model and/or a multimodal model (which can be a language model or other type of multimodal model), to evaluate the image to determine why the image fails to satisfy the condition(s) and to generate an image editing prompt that instructs the image editing model (which can also be a language model) to edit the image in a particular manner such that the edited image satisfies the conditions. The AI system can provide the image editing prompt and the image to the image editing model and the image editing model can edit the image and output the updated version of the image.

Using AI to evaluate images based on conditions and to generate image editing prompts as described herein enables the creation of specialized image editing prompts that instruct an image editing model to make appropriate edits to images that result in images that satisfy the conditions without making unnecessary edits, thereby producing high quality images that are as close to the original image as possible while satisfying the conditions. Additionally, specialized prompts are provided to the language model to ensure that the image editing prompts provided to the image editing model are adapted for the image editing model such that the image editing model does not have to be adapted or retrained for use with the language model. Using AI to edit images in this way reduces wasted computing resources that would otherwise be used to generate and upload multiple versions of an image and to evaluate the multiple versions until arriving at one that satisfies the conditions. This also increases the likelihood that a conforming image is created relative to users editing images with an incomplete understanding of the conditions that the images do not satisfy. This all contributes to a system capable of creating an updated image that conforms to the conditions faster, such that they can be created and served in a real time interactive environment - e.g., in response to a user search query or a component request that requests a digital component for display at a user's device.

As used throughout this document, the phrase "digital component" refers to a discrete unit of digital content or digital information (e.g., a video clip, audio clip, multimedia clip, gaming content, image, text, bullet point, artificial intelligence output, language model output, or another unit of content). A digital component can electronically be stored in a physical memory device as a single file or in a collection of files, and digital components can take the form of video files, audio files, multimedia files, image files, or text files and include advertising information, such that an advertisement is a type of digital component.

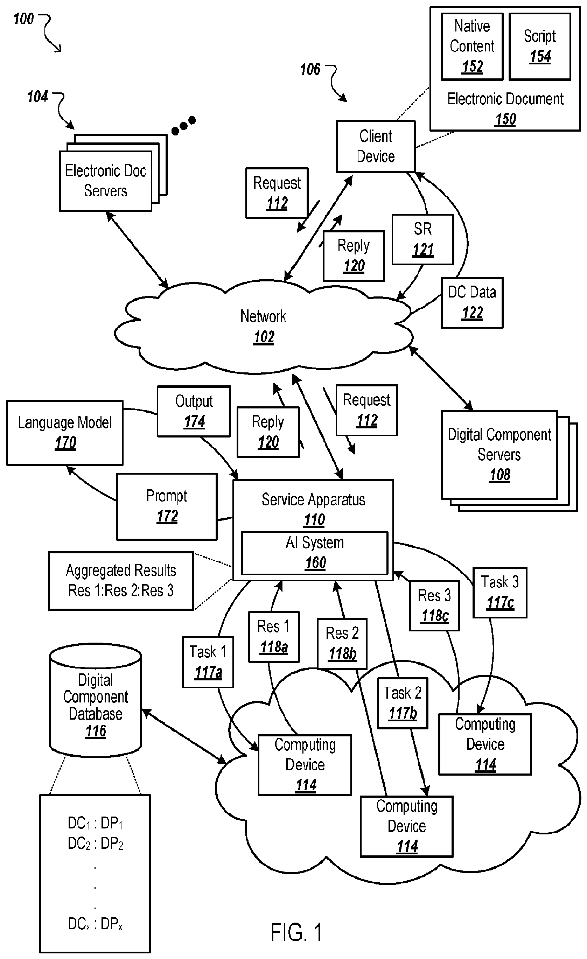

FIG. 1 is a block diagram of an example environment 100 in which images are evaluated based on conditions and edited using artificial intelligence. The example environment 100 includes a network 102, such as a local area network (LAN), a wide area network (WAN), the Internet, or a combination thereof. The network 102 connects electronic document servers 104, user devices 106, digital component servers 108, and a service apparatus 110. The example environment 100 may include many different electronic document servers 104, user devices 106, and digital component servers 108.

The service apparatus 110 is configured to provide various services to client devices 106 and/or publishers of electronic documents 150. In some implementations, the service apparatus 110 can provide search services by providing responses to search queries received from client devices 106. For example, the services apparatus 110 can include a search engine and/or an AI agent or other chat agent that enables users to interact with the agent over the course of multiple conversational queries and responses. The service apparatus 110 can also distribute digital components to client devices 106 for presentation with the responses and/or with electronic documents 150. For example, another search service computer system can send component requests 112 to the service apparatus 110 and these component requests 112 can include one or more queries. The service apparatus 110 and component requests 112 are described in further detail below.

A client device 106 is an electronic device capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally (i.e., on the client device). Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app, and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., a digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service apparatus 110, or a particular service provided by the service apparatus 110. In these situations, the digital component script is executed by the client device 106 when the given electronic document is processed by the client device 106. Execution of the digital component script configures the client device 106 to generate a request for digital components 112 (referred to as a "component request"), which is transmitted over the network 102 to the service apparatus 110. For example, the digital component script can enable the client device 106 to generate a packetized data request including a header and payload data. The component request 112 can include event data specifying features such as a name (or network location) of a server from which the digital component is being requested, a name (or network location) of the requesting device (e.g., the client device 106), and/or information that the service apparatus 110 can use to select one or more digital components, or other content, provided in response to the request. The component request 112 is transmitted, by the client device 106, over the network 102 (e.g., a telecommunications network) to a server of the service apparatus 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service apparatus 110. Similarly, event data specifying keywords associated with the electronic document ("document keywords") or entities (e.g., people, places, or things) that are referenced by the electronic document can also be included in the component request 112 (e.g., as payload data) and provided to the service apparatus 110 to facilitate identification of digital components that are eligible for presentation with the electronic document. The event data can also include a search query that was submitted from the client device 106 to obtain a search results page.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service apparatus 110 chooses digital components (e.g., third-party content, such as video files, audio files, images, text, gaming content, augmented reality content, and combinations thereof, which can all take the form of advertising content or non-advertising content) that will be presented with the given electronic document (e.g., at a location specified by the script 154) in response to receiving the component request 112 and/or using information included in the component request 112. In some implementations, choosing a digital component includes choosing a digital component based on textual features.

In some implementations, a digital component is selected in less than a second to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106. The described techniques are adapted to generate a digital component in a short amount of time such that these errors and user experience impact are reduced or eliminated.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the service apparatus 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC₁₋ₓ). The millions of available digital components can be indexed, for example, in a digital component database 116. Each digital component index entry can reference the corresponding digital component and/or include distribution parameters (DP₁-DPₓ) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords that must be matched (e.g., by electronic documents, document keywords, or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service apparatus 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service apparatus 110 aggregates the results 118a-118c received from the set of multiple computing devices 114 and uses information associated with the aggregated results to select one or more digital components that will be provided in response to the request 112. For example, the service apparatus 110 can select a set of winning digital components (one or more digital components) based on the outcome of one or more content evaluation processes, as discussed below. In turn, the service apparatus 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106.

In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit, to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., beside, the native content 152 of the electronic document 150. In some implementations, the digital component is overlayed over (or adjacent to) a portion of the native content 152 of the electronic document 150, and the service apparatus 110 can specify the presentation location within the electronic document 150 in the reply 120. For example, when the native content 152 includes video content, the service apparatus 110 can specify a location or object within the scene depicted in the video content over which the digital component is to be presented.

The service apparatus 110 can also include an artificial intelligence system 160 configured to autonomously generate digital components, either prior to a request 112 (e.g., offline) and/or in response to a request 112 (e.g., online or real-time). As described in more detail throughout this specification, the artificial intelligence ("AI") system 160 can collect online content about a specific entity (e.g., digital component provider or another entity) and summarize the collected online content using one or more language models 170, which can include large language models.

A large language model ("LLM") is a model that is trained to generate and understand human language. LLMs are trained on massive datasets of text and code, and they can be used for a variety of tasks. For example, LLMs can be trained to translate text from one language to another; summarize text, such as web site content, search results, news articles, or research papers; answer questions about text, such as "What is the capital of Georgia?"; create chatbots that can have conversations with humans; and generate creative text, such as poems, stories, and code.

The language model 170 can be any appropriate language model neural network that receives an input sequence made up of text tokens selected from a vocabulary and auto-regressively generates an output sequence made up of text tokens from the vocabulary. For example, the language model 170 can be a Transformer-based language model neural network or a recurrent neural network-based language model.

In some situations, the language model 170 can be referred to as an auto-regressive neural network when the neural network used to implement the language model 170 auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the neural network of the language model 170 can process the current input sequence to generate a score distribution, e.g., a probability distribution, that assigns a respective score, e.g., a respective probability, to each token in the vocabulary of tokens. The neural network of the language model 170 can then select, as the particular token, a token from the vocabulary using the score distribution. For example, the neural network of the language model 170 can greedily select the highest-scoring token or can sample, e.g., using nucleus sampling or another sampling technique, a token from the distribution.

As a particular example, the language model 170 can be an auto-regressive Transformer-based neural network that includes (i) a plurality of attention blocks that each apply a self-attention operation and (ii) an output subnetwork that processes an output of the last attention block to generate the score distribution.

The language model 170 can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A. Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

Generally, however, the Transformer-based neural network includes a sequence of attention blocks, and, during the processing of a given input sequence, each attention block in the sequence receives a respective input hidden state for each input token in the given input sequence. The attention block then updates each of the hidden states at least in part by applying self-attention to generate a respective output hidden state for each of the input tokens. The input hidden states for the first attention block are embeddings of the input tokens in the input sequence and the input hidden states for each subsequent attention block are the output hidden states generated by the preceding attention block.

In this example, the output subnetwork processes the output hidden state generated by the last attention block in the sequence for the last input token in the input sequence to generate the score distribution.

Generally, because the language model is auto-regressive, the service apparatus 110 can use the same language model 170 to generate multiple different candidate output sequences in response to the same request, e.g., by using beam search decoding from score distributions generated by the language model 170, using a Sample-and-Rank decoding strategy, by using different random seeds for the pseudo-random number generator that's used in sampling for different runs through the language model 170 or using another decoding strategy that leverages the auto-regressive nature of the language model.

In some implementations, the language model 170 is pre-trained, i.e., trained on a language modeling task that does not require providing evidence in response to user questions, and the service apparatus 110 (e.g., using AI system 160) causes the language model 170 to generate output sequences according to the pre-determined syntax through natural language prompts in the input sequence.

For example, the service apparatus 110 (e.g., AI system 160), or a separate training system, pre-trains the language model 170 (e.g., the neural network) on a language modeling task, e.g., a task that requires predicting, given a current sequence of text tokens, the next token that follows the current sequence in the training data. As a particular example, the language model 170 can be pre-trained on a maximum-likelihood objective on a large dataset of text, e.g., text that is publicly available from the Internet or another text corpus.

The AI system 160 can use the language model 170 to generate image editing prompts for editing images that fail to satisfy one or more conditions. The service apparatus 110 can maintain conditions for digital components and/or other images that are sent to client devices 106. For example, a condition can be used to ensure that digital components do not include explicit content or language. The conditions can vary based on a type of item corresponding to the images and/or based on the type of the images. For example, there may be a first set of conditions for a first type of product and a second set of conditions for a second type of product. In addition, the service apparatus 110 can maintain conditions for each publisher of electronic documents 150. For example, a publisher that publishes web pages for children may have enhanced conditions for digital components presented with its web pages.

In some implementations, the language model 170 can be adapted to generate the image editing prompts using zero-shot learning or few-shot learning. In some examples, the system can provide manually created examples to the language model 170 for few-shot learning. In few-shot learning, the AI system 160 can provide a small number (e.g., three to seven, ten, or another numbed) of training examples to the langue model 170. These training examples and include original images, a set of conditions, and image editing prompts that includes instructions for editing the image to comply with the conditions.

The service apparatus 110 can evaluate image digital components and/or other images to determine whether these images satisfy a set of conditions for each image. For images that do not satisfy the conditions, the service apparatus 110 can use the AI system 160 to evaluate why the images do not satisfy the conditions and/or to edit the images such that the images conform to the conditions.

The AI system 160 can use the language model 170 to generate an image editing prompt that instructs an image editing model to generate an updated image that satisfies the conditions. For example, the AI system 160 can generate a prompt 172 that instructs the language model 170 to generate the image editing prompt based on explanation data that is related to an explanation as to why the image does not satisfy the conditions. In some implementations, the prompt 172 includes the explanation data. The explanation data can include data that indicates that the image has violated the conditions, an explanation of the violation (e.g., the name of the policy violated), a portion of the image that causes the image to violate the conditions, the conditions themselves, and/or other data. The data indicating the portion of the image that causes the image to violate the conditions can include a location indicator depicted in the image.

For example, the definition of a condition can state: "An image violates [the policy name] policy if [policy definition]." In this example, the explanation data can state: "This particular image violates [policy name] policy because [explanation of why the image violates the policy]." The prompt 172 can then be "An image violates [the policy name] policy if [policy definition]. This particular image violates [policy name] policy because [explanation of why the image violates the policy]. My task is to edit the image so that the image doesn't violate [the policy name] policy, and I am going to use a diffusion model by providing it with the original image and the image editing prompt. Please generate the image editing prompt to make the image policy compliant. Make sure the image editing prompt doesn't remove or edit the important things that the image is trying to convey." The text in brackets can be populated by the AI system 160 with the appropriate data. For example, the AI system 160 can populate [the policy name] with the policy name for the policy that the original image violates.

Here, the prompt 172 is specifically adapted to instruct the language model 170 to generate an image editing prompt for a diffusion model by informing the language model 170 of the subsequent task: "I am going to use a diffusion model by providing it with the original image and the image editing prompt." In this way, the language model 170 can generate an image editing prompt that is specifically adapted to diffusion models that accepts, as input, an image editing prompt and an original image. This precludes the need to adapt or retrain an image editing model.

In some implementations, the AI system 160 can maintain a prompt template for each of one or more image editing models. Each prompt template can be in the form of the example prompt 172 having the fields in brackets that can be populated by the AI system 160 using the policy information and the explanation information. When evaluating and editing an image that violates a condition, e.g., a policy condition, the AI system 160 can receive the explanation data from a multimodal model that has question and answer capabilities and image editing capabilities and populate the template using the explanation data.

If a multimodal language model is used as the language model 170, the prompt 172 can include the image. If the language model 170 accepts only text inputs, the prompt 172 can include a caption that explains the content of the image to the language model 170.

In some examples, the explanation data can include the image with a bounding box around the portion of the image that is considered to be the reason that the image violates the conditions. In this example, the bounding box is the location indicator and the language model 170 is a multimodal model that accepts text and image prompts 172 as inputs.

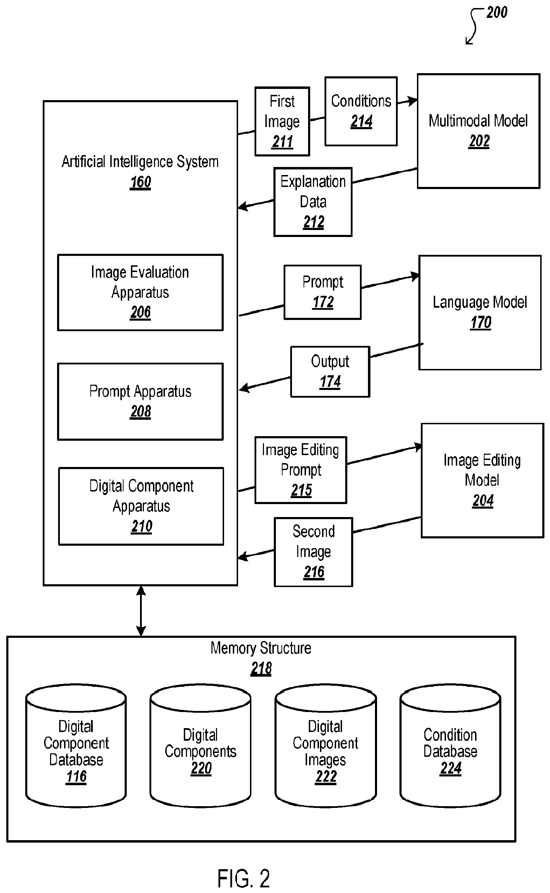

In some implementations, the AI system 160 uses the language model 170 to generate the explanation data. For example, the AI system 160 can use the language model 170 or another model to generate a caption for the image. The caption can explain the contents of the image. For example, the AI system 160 can generate a prompt 172 that instructs the language model 170 or another model (e.g., another multimodal model as described with reference to FIG. 2) to generate a caption of an input image. The AI system 160 can receive the caption and generate another prompt 172 that instructs the language model 170 to evaluate the caption and the set of conditions and output an explanation of why the image or what portion of the image as described by the caption violates the conditions. In some examples, the prompt 172 includes a listing of objects identified in the image based on the bounding boxes. In this example, the prompt 172 can include the caption and the set of conditions.

For example, the prompt 172 can state: "An image violates [policy name] policy if [policy definition]. This image includes [description of image]. The following objects and their bounding boxes will give you more spatial awareness context of the image: [object 1: <x1, y1, x2, y2>, object 2: <x1, y1, x2, y2>. Based on the context I provided you about the image, predict if the image violates [policy name] policy. Provide a very detailed explanation for your decision including the regions that violate the policy." In this example, x1 and x2 are coordinates within the image along one dimension (e.g., an x-axis or horizontal direction) and y1 and y2 are coordinates within the image along another dimension (e.g., a y-axis or vertical direction). These coordinates inform the language model 170 as to where objects 1 and 2 can be found in the image.

In some implementations, the AI system 160 uses a multimodal model to generate the explanation data based on the image and the set of conditions. In this example, the AI system 160 provides the image and the set of conditions to the multimodal model and requests that the multimodal model output the explanation data, e.g., an explanation as to why the image does not satisfy the conditions and/or an image with a bounding box or other location indicator that indicates the portion of the image that violates the conditions.

In either example, the language model 170 can evaluate the prompt 172 with the explanation data and generate an output 174 that includes the image editing prompt based on the input data. The language model 170 can generate the image editing prompt in a manner (e.g., having a structure) that instructs an image editing model to generate an updated image based on an input image and the prompt.

The AI system 160 can use the image editing prompt to generate an updated image using an image editing model, as described in further detail with reference to FIG. 2. The updated image is an edited version of the initial image that does not violate the conditions. For example, the updated image may not contain or portray the area (e.g., the location of content) within the image that violates the conditions. In a particular example, the image editing model may replace the content in that portion of the image with content that satisfies the conditions.

For example, the image editing prompt for hiding a certain region of a person in the image or removing an item can state: "Cover the person's [body part] and remove the [item] from the image." Another example of the image editing prompt for editing a person in the image can state: "Make the facial expressions of the person(s) in the image neutral." Another example of the image editing prompt to remove an item from the image can state: "Crop the image to remove the item from the image." Another example of the image editing prompt to remove an item from the image can state: "Erase the adult beverage bottles from the image."

The AI system 160 can then send (e.g., provide) the updated image to one or more devices (e.g., one or more client devices 106) as a reply 120. For example, the AI system 160 can generate a digital component to provide in response to the request 112 from a user. The digital component can include the updated image. The digital component can include a link to an electronic document related to the subject of the digital component (e.g., an item depicted by the image), metadata, and/or other data and/or files that enable the client device 106 to render the updated image.

Although a single language model 170 is shown in FIG. 1, different language models can be specially trained to process different prompts at different stages of the processing pipeline. For example, a language model can be trained to generate explanation data for images while another language model can be trained to generate image editing prompts based on explanation data.

FIG. 2 is a block diagram 200 illustrating interactions between the AI system 160, a multimodal model 202, a language model 170, and an image editing model 204. The AI system 160 can include an image evaluation apparatus 206, a prompt apparatus 208, and a digital component apparatus 210.

The language model 170 can be trained to perform various tasks, as described above. The AI system 160 can use the language model 170 to generate explanation data and/or to generate image editing prompts for the image editing model 204. Although one language model 170 is shown in FIG. 2, the AI system 160 can interact with any number of language models 170 to generate an image editing prompt to instruct the image editing model 204 to generate an updated image that satisfies one or more conditions, e.g., one or more policy conditions.

The multimodal model 202 can be implemented as a machine learning model that is trained to generate explanation data 212. For example, the training process can use a set of training images and ground truth explanation data corresponding to the training data. For example, the ground truth training data can include, for each image that violates a condition, a label that indicates the condition violated and the reason that the image violates the condition. The label can also indicate the portion of the image that violates the condition. Based on this set of training images, the multimodal model 202 can be trained to generate the explanation data 212.

The multimodal model 202 can be trained to generate text based on text and image inputs. For example, the multimodal model 202 can be trained to output, as explanation data, an explanation that explains why an image violates one or more conditions based on an input that includes the image and text that indicates the one or more conditions. In some implementations, the multimodal model 202 can be trained to output, as explanation data, the image with a location indicator (e.g., bounding box) that indicates the portion of the image that violates the condition. The bounding boxes can be outlined using x and y coordinates of the image, similar to the example provided above. The multimodal model 202 can take an image and texts as inputs, and the multimodal model 202 can generate text as output. During training, images and questions (e.g., text that asks about the explanation data) are used as inputs for the model, and the multimodal mode 202 is trained to generate answers (e.g., text that answers the questions about the explanation data). In a supervised learning example, the training samples can include images and questions that include conditions, with labels having answers that include explanations that explain why the image does not satisfy the conditions. In some implementations, the multimodal model 202 can be a neural network or other type of machine learning model that is trained to provide answers in response to questions and to edit images.

The image editing model 204 can be a machine learning model, e.g., text to image neural network, that is trained to generate images based on input images and an image editing prompt 215 that instructs the image editing model 204 on how to edit the image. In some implementations, the image editing model 204 is a language model trained to edit images. In some implementations, the image editing model 204 is a diffusion model.

During training, the image editing model 204 can take as input an original image caption of an image and an image editing prompt, and the image editing model 204 can be trained to generate a target text prompt by applying the image editing prompt to the image caption. Given the image and the target text prompt, the image editing model 204 can encode the target text prompt to generate an initial text embedding. The image editing model 204 then processes (e.g., optimizes) the initial text embedding to reconstruct the input image. The system then fine tunes the image editing model 204 (e.g., a diffusion model of the image editing model 204) to improve the overall accuracy by interpolating the target text prompt with the input image to generate the output of the image editing model (e.g., the edited image).

The AI system 160 can also include or be configured to interact with the memory structure 218 to extract and/or store information and content. The memory structure 218 can include one or more databases or other data structures stored on one or more memories and/or data storage devices. In particular, the memory structure 218 can store the digital component database 116, digital components 220, images 222, and condition data 224.

As described above, the digital component database 116 can include distribution parameters for digital components 220. The distribution parameters for a digital component 220 can include, for example, keywords and/or geographic locations for which the digital component 220 is eligible to be distributed to client devices 106. The digital component database 116 can also include, for each digital component 220, metadata of the digital component, a caption for each image 222 corresponding to the digital component, data related to the digital component provider that provides the digital component, and/or other data related to the digital component. The digital components 220 can include candidate digital components that can be provided in response to component requests 112 and/or queries received by the service apparatus 110. The images 222 can include one or more images for each digital component 220. The AI system 160 can obtain images for digital component 220 from digital component providers or from other sources.

The condition database 224 can store the conditions for the images. The condition database 224 can store a set of one or more conditions for each type of image, for each type of item depicted by images, for each publisher, and/or for other entities.

The AI system 160 can interact with the memory structure 218 and the models 170, 202, 204 to evaluate images and to generate updated images for those that do not satisfy one or more conditions for the image. In some examples, the AI system 160 can receive an image (e.g., a first image 211) from a client device 106 (e.g., a user device of a user or a device of a digital component provider). The image evaluation apparatus 206 can obtain a set of conditions for the first image 211 from the conditions database 224. For example, the image evaluation apparatus 206 can obtain a set of conditions 214 for the image based on a type of item (e.g., type of product) that is the subject of a digital component that includes the first image 211. The image evaluation apparatus 206 can evaluate the first image 211 based on the conditions 214 and output data indicating whether the first image 211 satisfies the conditions 214. In another example, a human can review the first image 211 and provide data to the AI system 160 indicating whether the first image 211 satisfies the conditions 214.

If the first image 211 does not satisfy the conditions 214, the AI system 160 can generate an image editing prompt 215 that instructs the image editing model 204 to edit the first image 211 to create a second image 216 that satisfies the conditions 214. The AI system 160 can use the multimodal model 202 and/or the language model 170 to generate the image editing prompt 215.

In some implementations, the AI system 160 sends the first image 211 and the conditions 214 to the multimodal model 202 with a request or question that requests that the multimodal model 202 output explanation data 212 indicating why the first image 211 (e.g., in text) violates the conditions 214 and/or the location of the portion of the first image 211 that violates the conditions 214, e.g., using a bounding box or other location indicator such as another type of visual indicator overlayed over the portion of the first image 211, a text description of the location, or coordinates (e.g., pixel coordinates) of the portion of the first image 211.

In this example, the AI system 160 can generate a prompt 172 based on the explanation data 212. The prompt 172 can include instructions that instruct the language model 170 to generate an image editing prompt 215 that instructs the image editing model 204 to generate the second image 216 that satisfies the conditions 214. The prompt 172 can include the first image 211, the explanation data 212, and/or the conditions 214.

In some implementations, the AI system 160 sends the first image 211 to the multimodal model 202 with a request for the multimodal model 202 to generate a caption for the first image 211. The caption can explain the contents of the image. In this example, the AI system 160 can generate the prompt 172 based on the caption and the conditions 214. For example, the prompt 172 can instruct the language model 170 to output the explanation data 212 based on the caption and the conditions 214 instead of the multimodal model 202. In this example, the explanation data 212 can indicate which portion of the first image 211 in reference to the caption violates the conditions 214 and/or why that portion of the first image 211 violates the conditions 214. The AI system 160 can then generate a second prompt 172 to the language model 170 that instructs the language model 170 to output an image editing prompt 215 based on the explanation 212, similar to the previous example.

The AI system 160 can then provide the image editing prompt 212 to the image editing model 204. The AI system 160 can also provide the first image 211 and/or a version of the first image 211 that includes a location indicator that indicates the portion of the image that violates the conditions 214. The image editing model 204 can edit the first image 211 based on the image editing prompt 215 and output, as the second image 216, an edited version of the first image 211.

In some implementations, the AI system 160 can evaluate the second image 216 to ensure that the second image 216 satisfies the conditions 214, e.g., using the image evaluation apparatus 206, as described above. If the second image 216 does not satisfy the conditions 214, the AI system 160 can generate another edited version of the first image 211 using similar techniques. However, the AI system 160 can modify the prompt(s) 172 to the language model 170 to ensure that, or increase the likelihood that, the edited image satisfies the conditions 214. In some examples, if the edited image does not satisfy the conditions 214, the system can provide the AI system 160 with the original image caption, the original explanation data, the image editing prompt, the edited image caption, and the explanation of the edited image and the AI system 160 can modify the prompt 172 based on the provided information to increase the likelihood that the edited image will satisfy the conditions 214.

If the second image 216 satisfies the conditions, the AI system 160 can send the second image 216 to client devices 106. In some implementations, the digital component apparatus 210 can generate a digital component using the second image 216 and send the digital component to client devices 106. For example, the digital component apparatus 210 can generate a digital component that depicts the second image 216 and that includes a link to an electronic document and/or data/files that enable the client devices 106 to render the digital component. The AI system 160 can provide the digital component to the service apparatus 110 and the service apparatus 100 can distribute the digital component to client devices 106 in response to component requests 112, as described above.

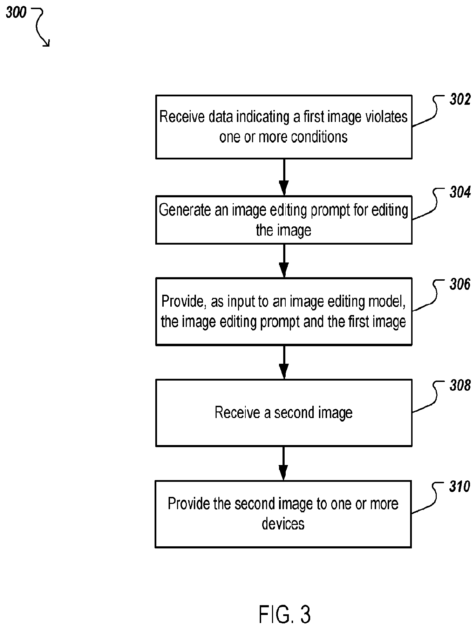

FIG. 3 is a flow chart of an example process 300 for generating a personalized image ad. Operations of the process 300 can be performed, for example, by the AI system 160 of FIG. 1, or another data processing apparatus. The operations of the process 300 can also be implemented as instructions stored on a computer readable medium, which can be non-transitory. Execution of the instructions, by one or more data processing apparatus, causes the one or more data processing apparatus to perform operations of the process 300.

The system receives data indicating that a first image violates one or more conditions (302). For example, the system can evaluate the first image based on the one or more conditions or receive the data indicating that the first image violates the one or more conditions from another system. In some implementations, the system provides the image and the conditions to a language model or a multimodal model with a request to predict whether the image violates any of the conditions and, if so, to output explanation data that explains why the image violates the condition(s).

The system generates an image editing prompt for editing the first image in response to receiving the data indicating that the first image violates the one or more conditions (304). As described above, the system can generate the image editing prompt using a chain of prompts to one or more machine learning models, e.g., to a multimodal model and/or one or more language models. The image editing prompt can instruct an image editing model to edit the first image such that the first image satisfies the one or more conditions.

The system provides, as input to an image editing model, the image editing prompt and the first image (306). The image editing model can generate a second image by editing the first image based on the image editing prompt. The system receives, as an output of the image editing model, the second image.

The system provides the second image to one or more devices (310). For example, the system can provide the second image to the device that provided the first image to the system and/or to other devices, e.g., as an image digital component that is provided in response to component requests. For example, the system can be part of a service apparatus 110 that distributed image digital components to client devices 106, as described above.

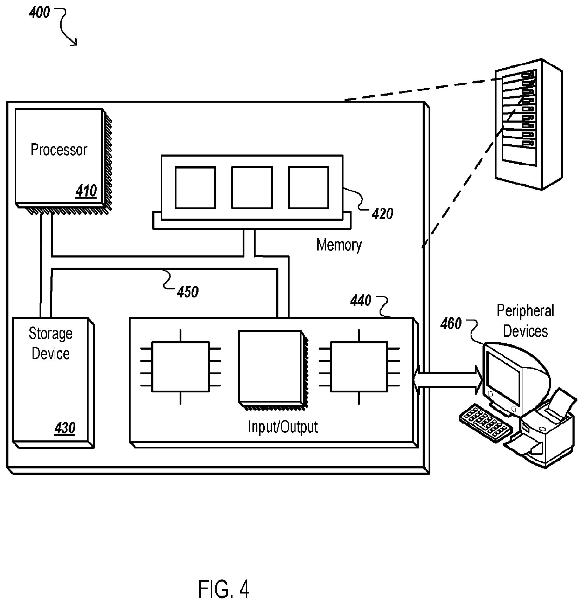

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

This document refers to a service apparatus. As used herein, a service apparatus is one or more data processing apparatus that perform operations to facilitate the distribution of content over a network. The service apparatus is depicted as a single block in block diagrams. However, while the service apparatus could be a single device or single set of devices, this disclosure contemplates that the service apparatus could also be a group of devices, or even multiple different systems that communicate in order to provide various content to client devices. For example, the service apparatus could encompass one or more of a search system, a video streaming service, an audio streaming service, an email service, a navigation service, an advertising service, a gaming service, or any other service.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method, comprising:
receiving data indicating that a first image violates one or more conditions;
in response to receiving the data indicating that the first image violates the one or more conditions, generating an image editing prompt that instructs an image editing model to edit the first image to satisfy the one or more conditions, the generating comprising:
generating explanation data that indicates a location of content within the first image that violates the one or more conditions; and
generating, using a language model, the image editing prompt based on the explanation data and the one or more conditions;
providing, as input to an image editing model, the image editing prompt and the first image;
receiving, as an output of the image editing model, a second image; and
providing the second image to one or more devices.

2. The method of claim 1, wherein generating the explanation data comprises providing the image and the one or more conditions to a multimodal model trained to identify locations within images that violate input conditions.

3. The method of claim 1, wherein generating the explanation data comprises providing the image and the one or more conditions to a multimodal model trained to predict whether an image violates input conditions and to output data indicating a location of content in the image that is likely to violate at least one of the input conditions.

4. The method of claim 1 or 2, wherein generating the explanation data comprises:
providing the first image to a first machine learning model trained to generate image captions for images;
receiving, from the first machine learning model, an image caption for the image;
providing the image caption and the one or more conditions to a second machine learning model trained to output explanation data for images based on input image captions and input conditions; and
receiving the explanation data for the first image from the second machine learning model.

5. The method of any preceding claim, wherein the explanation data comprises a location indicator, and wherein the location indicator indicates a location of content in the first image that is determined to violate at least one of the one or more conditions.

6. The method of claim 5, wherein the location indicator comprises a bounding box that is depicted in the first image around the content in the first image that is determined to violate at least one of the one or more conditions.

7. The method of claim 5, wherein the location indicator comprises coordinates that define a bounding box around the content in the first image that is determined to violate at least one of the one or more conditions.

8. The method of any one of claims 5 to 7, wherein providing, as input to an image editing model, the image editing prompt and the first image comprises providing the location indicator to the image editing model.

9. The method of any preceding claim, wherein the explanation data comprises an explanation that indicates why the first image violates the one or more conditions.

10. The method of any preceding claim, wherein the image editing prompt comprises at least a portion of the explanation data.

11. The method of any preceding claim, wherein generating, using the language model, the image editing prompt based on the explanation data and the one or more conditions comprises generating a prompt for the language model using the explanation data and providing the prompt to the language model.

12. The method of claim 11, wherein the prompt includes instructions that instruct the language model to generate the image editing prompt based on the explanation data and data defining each condition violated by the first image, and wherein the explanation data comprises a name of each condition violated by the first image.

13. The method of claim 11 or 12, wherein generating the image editing prompt comprises:
obtaining a prompt template that is adapted to the image editing model; and
populating the prompt with at least a portion of the explanation data, including a name of a condition that the first image is determined to violate,
wherein the image editing prompt output by the language model is adapted to the image editing model.

14. A system comprising:
one or more processors; and
one or more storage devices storing instructions that, when executed by the one or more processors, cause the one or more processors to perform the method of any of claims 1 to 13.

15. A computer readable storage medium carrying instructions that, when executed by one or more processors, cause the one or more processors to perform the method of any of claims 1 to 13.

## Patentansprüche

1. Computerimplementiertes Verfahren, umfassend:
Empfangen von Daten, die angeben, dass ein erstes Bild eine oder mehrere Bedingungen verletzt;
als Reaktion auf das Empfangen der Daten, die angeben, dass das erste Bild die eine oder die mehreren Bedingungen verletzt, Erzeugen eines Bildbearbeitungs-Prompts, der ein Bildbearbeitungsmodell anweist, das erste Bild so zu bearbeiten, dass es die eine oder die mehreren Bedingungen erfüllt, wobei das Erzeugen umfasst:
Erzeugen von Erklärungsdaten, die eine Position von Inhalt innerhalb des ersten Bildes angeben, der die eine oder die mehreren Bedingungen verletzt; und
Erzeugen, unter Verwendung eines Sprachmodells, des Bildbearbeitungs-Prompts auf der Grundlage der Erklärungsdaten und der einen oder der mehreren Bedingungen;
Bereitstellen, als Eingabe für ein Bildbearbeitungsmodell, des Bildbearbeitungs-Prompts und des ersten Bildes;
Empfangen, als Ausgabe des Bildbearbeitungsmodells, eines zweiten Bildes; und
Bereitstellen des zweiten Bildes für eine oder mehrere Vorrichtungen.

2. Verfahren nach Anspruch 1, wobei das Erzeugen der Erklärungsdaten ein Bereitstellen des Bildes und der einen oder der mehreren Bedingungen für ein multimodales Modell umfasst, das darauf trainiert ist, Positionen innerhalb von Bildern zu identifizieren, die Eingabebedingungen verletzen.

3. Verfahren nach Anspruch 1, wobei das Erzeugen der Erklärungsdaten ein Bereitstellen des Bildes und der einen oder der mehreren Bedingungen für ein multimodales Modell umfasst, das darauf trainiert ist, vorherzusagen, ob ein Bild Eingabebedingungen verletzt, und Daten auszugeben, die eine Position von Inhalt in dem Bild angeben, der wahrscheinlich mindestens eine der Eingabebedingungen verletzt.

4. Verfahren nach Anspruch 1 oder 2, wobei das Erzeugen der Erklärungsdaten umfasst:
Bereitstellen des ersten Bildes für ein erstes maschinelles Lernmodell, das darauf trainiert ist, Bildunterschriften für Bilder zu erzeugen;
Empfangen, von dem ersten maschinellen Lernmodell, einer Bildunterschrift für das Bild;
Bereitstellen der Bildunterschrift und der einen oder der mehreren Bedingungen für ein zweites maschinelles Lernmodell, das darauf trainiert ist, Erklärungsdaten für Bilder auf der Grundlage von Eingabe-Bildunterschriften und Eingabebedingungen auszugeben; und
Empfangen der Erklärungsdaten für das erste Bild von dem zweiten maschinellen Lernmodell.

5. Verfahren nach einem vorhergehenden Anspruch, wobei die Erklärungsdaten einen Positionsindikator umfassen und wobei der Positionsindikator eine Position von Inhalt in dem ersten Bild angibt, von dem bestimmt wird, dass er mindestens eine der einen oder mehreren Bedingungen verletzt.

6. Verfahren nach Anspruch 5, wobei der Positionsindikator einen Begrenzungsrahmen umfasst, der in dem ersten Bild um den Inhalt in dem ersten Bild herum dargestellt ist, von dem bestimmt wird, dass er mindestens eine der einen oder mehreren Bedingungen verletzt.

7. Verfahren nach Anspruch 5, wobei der Positionsindikator Koordinaten umfasst, die einen Begrenzungsrahmen um den Inhalt in dem ersten Bild herum definieren, von dem bestimmt wird, dass er mindestens eine der einen oder mehreren Bedingungen verletzt.

8. Verfahren nach einem der Ansprüche 5-7, wobei das Bereitstellen, als Eingabe für ein Bildbearbeitungsmodell, des Bildbearbeitungs-Prompts und des ersten Bildes ein Bereitstellen des Positionsindikators für das Bildbearbeitungsmodell umfasst.

9. Verfahren nach einem vorhergehenden Anspruch, wobei die Erklärungsdaten eine Erklärung umfassen, die angibt, warum das erste Bild die eine oder die mehreren Bedingungen verletzt.

10. Verfahren nach einem vorhergehenden Anspruch, wobei der Bildbearbeitungs-Prompt mindestens einen Teil der Erklärungsdaten umfasst.

11. Verfahren nach einem vorhergehenden Anspruch, wobei das Erzeugen, unter Verwendung des Sprachmodells, des Bildbearbeitungs-Prompts auf der Grundlage der Erklärungsdaten und der einen oder der mehreren Bedingungen ein Erzeugen eines Prompts für das Sprachmodell unter Verwendung der Erklärungsdaten und ein Bereitstellen des Prompts für das Sprachmodell umfasst.

12. Verfahren nach Anspruch 11, wobei der Prompt Anweisungen umfasst, die das Sprachmodell anweisen, den Bildbearbeitungs-Prompt auf der Grundlage der Erklärungsdaten und von Daten zu erzeugen, die jede von dem ersten Bild verletzte Bedingung definieren, und wobei die Erklärungsdaten einen Namen jeder von dem ersten Bild verletzten Bedingung umfassen.

13. Verfahren nach Anspruch 11 oder 12, wobei das Erzeugen des Bildbearbeitungs-Prompts umfasst:
Erhalten einer Prompt-Vorlage, die an das Bildbearbeitungsmodell angepasst ist; und
Befüllen des Prompts mit mindestens einem Teil der Erklärungsdaten, einschließlich eines Namens einer Bedingung, von der bestimmt wird, dass das erste Bild sie verletzt,
wobei der von dem Sprachmodell ausgegebene Bildbearbeitungs-Prompt an das Bildbearbeitungsmodell angepasst ist.

14. System, umfassend:
einen oder mehrere Prozessoren; und
eine oder mehrere Speichervorrichtungen, die Anweisungen speichern, die bei Ausführung durch den einen oder die mehreren Prozessoren den einen oder die mehreren Prozessoren veranlassen, das Verfahren nach einem der Ansprüche 1-13 durchzuführen.

15. Computerlesbares Speichermedium, das Anweisungen trägt, die bei Ausführung durch einen oder mehrere Prozessoren den einen oder die mehreren Prozessoren veranlassen, das Verfahren nach einem der Ansprüche 1-13 durchzuführen.

## Revendications

1. Procédé mis en œuvre par ordinateur, comprenant :
la réception de données indiquant qu'une première image enfreint une ou plusieurs conditions ;
en réponse à la réception des données indiquant que la première image enfreint les une ou plusieurs conditions, la génération d'une invite de modification d'image qui ordonne à un modèle de modification d'images de modifier la première image afin de satisfaire aux une ou plusieurs conditions, la génération comprenant :
la génération de données explicatives indiquant un emplacement de contenu, au sein de la première image, qui enfreint les une ou plusieurs conditions ; et
la génération, à l'aide d'un modèle de langage, de l'invite de modification d'image sur la base des données explicatives et des une ou plusieurs conditions ;
la fourniture, en entrée d'un modèle de modification d'images, de l'invite de modification d'image et de la première image ;
la réception, en tant que sortie du modèle de modification d'images, d'une seconde image ; et
la fourniture de la seconde image à un ou plusieurs dispositifs.

2. Procédé selon la revendication 1, dans lequel la génération des données explicatives comprend la fourniture de l'image et des une ou plusieurs conditions à un modèle multimodal entraîné à identifier des emplacements dans les images qui enfreignent les conditions d'entrée.

3. Procédé selon la revendication 1, dans lequel la génération des données explicatives comprend la fourniture de l'image et des une ou plusieurs conditions à un modèle multimodal entraîné pour prédire si une image enfreint les conditions d'entrée et pour produire en sortie des données indiquant un emplacement de contenu dans l'image susceptible d'enfreindre au moins l'une des conditions d'entrée.

4. Procédé selon la revendication 1 ou 2, dans lequel la génération des données explicatives comprend :
la fourniture de la première image à un premier modèle d'apprentissage automatique entraîné pour générer des légendes d'images pour des images ;
la réception, du premier modèle d'apprentissage automatique, d'une légende d'image pour l'image ;
la fourniture de la légende d'image et des une ou plusieurs conditions à un second modèle d'apprentissage automatique entraîné pour produire en sortie des données explicatives pour des images sur la base des légendes d'images d'entrée et des conditions d'entrée ; et
la réception, depuis le second modèle d'apprentissage automatique, des données explicatives pour la première image.

5. Procédé selon une quelconque revendication précédente, dans lequel les données explicatives comprennent un indicateur d'emplacement, et dans lequel l'indicateur d'emplacement indique un emplacement de contenu dans la première image qui est considéré comme enfreignant au moins l'une des une ou plusieurs conditions.

6. Procédé selon la revendication 5, dans lequel l'indicateur d'emplacement comprend une boîte englobante représentée dans la première image autour du contenu de la première image qui est considéré comme enfreignant au moins l'une des une ou plusieurs conditions.

7. Procédé selon la revendication 5, dans lequel l'indicateur d'emplacement comprend des coordonnées qui définissent une boîte englobante autour du contenu de la première image qui est considéré comme enfreignant au moins l'une des une ou plusieurs conditions.

8. Procédé selon l'une quelconque des revendications 5 à 7, dans lequel la fourniture, en entrée d'un modèle de modification d'images, de l'invite de modification d'image et de la première image comprend la fourniture de l'indicateur d'emplacement au modèle de modification d'images.

9. Procédé selon une quelconque revendication précédente, dans lequel les données explicatives comprennent une explication indiquant pourquoi la première image enfreint les une ou plusieurs conditions.

10. Procédé selon une quelconque revendication précédente, dans lequel l'invite de modification d'image comprend au moins une partie des données explicatives.

11. Procédé selon une quelconque revendication précédente, dans lequel la génération, à l'aide du modèle de langage, de l'invite de modification d'image sur la base des données explicatives et des une ou plusieurs conditions comprend la génération d'une invite pour le modèle de langage à l'aide des données explicatives et la fourniture de l'invite au modèle de langage.

12. Procédé selon la revendication 11, dans lequel l'invite comporte des instructions qui ordonnent au modèle de langage de générer l'invite de modification d'image sur la base des données explicatives et des données définissant chaque condition que la première image enfreint, et dans lequel les données explicatives comprennent un nom pour chaque condition que la première image enfreint.

13. Procédé selon la revendication 11 ou 12, dans lequel la génération de l'invite de modification d'image comprend :
l'obtention d'un patron d'invite adapté au modèle de modification d'images ; et
remplir l'invite avec au moins une partie des données explicatives, incluant le nom d'une condition considérée comme étant enfreinte par la première image,
dans lequel l'invite de modification d'image produite en sortie par le modèle de langage est adaptée au modèle de modification d'images.

14. Système comprenant :
un ou plusieurs processeurs ; et
un ou plusieurs dispositifs de stockage stockant des instructions qui, lorsqu'elles sont exécutées par les un ou plusieurs processeurs, amènent les un ou plusieurs processeurs à réaliser le procédé selon l'une quelconque des revendications 1 à 13.

15. Support de stockage lisible par ordinateur contenant des instructions qui, lorsqu'elles sont exécutées par un ou plusieurs processeurs, amènent les un ou plusieurs processeurs à réaliser le procédé selon l'une quelconque des revendications 1 à 13.
